# EUROPÄISCHE PATENTSCHRIFT

(11) **EP 1 262 465 B1**
(45) Veröffentlichungstag und Bekanntmachung des Hinweises auf die Patenterteilung: **15.10.2003**
(21) Anmeldenummer: 02011540.8
(22) Anmeldetag: 23.05.2002
(51) Int. Cl.: C04B 24/26

(54) **Verwendung von Mischpolymerisaten von Vinylester-, (Meth)acrylsäureester- und gegebenenfalls Ethylen-Comonomeren in Baustoffen**
Use of polymers comprising vinylester, (meth)acryl acid ester and optionally ethylene as additives in building materials
Utilisation de polymères comprenant d'ester vinylique, d'ester d'acide (meth)acrylique et, le cas échéant, d'éthylène comme additif pour des matériaux de construction

(30) Priorität: 31.05.2001 DE 10126560
(43) Veröffentlichungstag der Anmeldung: 04.12.2002
(73) Patentinhaber: Wacker Polymer Systems GmbH & Co. KG, 84489 Burghausen (DE)
(72) Erfinder: Weitzel, Hans-Peter, Dr., 84571 Reischach (DE)
(74) Vertreter: Schuderer, Michael, Dr.

(56) Entgegenhaltungen:
- EP-A- 1 110 978
- EP-A- 1 174 447
- US-A- 5 763 508

## Beschreibung

Die Erfindung betrifft die Verwendung von mit Schutzkolloid stabilisierten Mischpolymerisaten von Vinylester-, (Meth)acrylsäureester- und gegebenenfalls Ethylen-Comonomeren, in Form deren wässrigen Dispersionen oder in Wasser redispergierbaren Polymerpulver in Baustoffen (Mörtelmassen).

Schutzkolloid-stabilisierte Polymerisate werden vor allem in Form deren wässriger Dispersionen oder in Wasser redispergierbarer Polymerpulver in Baustoffen eingesetzt. Als Schutzkolloide werden in der Regel Polyvinylalkohole eingesetzt. Der Einsatz von Polyvinylalkohol ist erstrebenswert, weil dieser im Vergleich zu Systemen, die durch niedermolekulare Verbindungen (Emulgatoren) stabilisiert sind, selbst zur Festigkeit (z.B. Haftzugswerte im Fliesenkleber) beiträgt. Als Monomere zur Herstellung von redispergierbaren Pulvern werden bisher bevorzugt Vinylester und Ethylen eingesetzt, da die Stabilisierung von Acrylatcopolymeren bzw. Styrolacrylatcopolymeren durch Polyvinylalkohol nicht so einfach zu bewerkstelligen ist. Insbesondere ist es nicht trivial eine Acrylatdispersion alleinig mit Polyvinylalkohol so zu stabilisieren, dass die daraus resultierenden Pulver block- bzw. lagerstabil sind. Auch die Kombination von Vinylester und Ethylen mit (Meth)acrylaten ist aus dem gleichen Grund nicht häufig anzutreffen. Vielfach beschrieben sind hingegen wässrige Dispersionen auf dieser Basis, also z.B. Vinylacetat-Butylacrylat-Copolymere oder Vinylacetat-Acrylat-Ethylen-Copolymere. Diese Dispersionen sind jedoch emulgatorstabilisiert und können nicht zu redispergierbaren Pulvern versprüht werden.

Bei Verwendung der Kombination Vinylester mit Ethylen ist der zugängliche Tg-Bereich auf einen Bereich von ca. +30°C (Vinylacetathomopolymer) bis ca. -25°C eingeschränkt. Höhere Glastemperaturen sind nicht zugänglich, da es kein systemgerechtes Monomer gibt, das zu höheren Glastemperaturen führt als Vinylacetat. Vinylchlorid ist aus ökologischen Gründen nicht mehr zeitgerecht und wird kaum mehr verwendet. Andererseits sind tiefere Glastemperaturen als -25°C nur schwer zugänglich, da hierzu Ethylenmengen deutlich größer als 50 Mol-% der Monomermischung notwendig werden. Diese hochethylenhaltigen Polymere lassen sich zwar herstellen, neigen aber zur Kristallisation, so dass kein eindeutiger Glaspunkt mehr gefunden wird; außerdem zeigen diese Polymere nicht die für diese Tg erwarteten hochelastischen Eigenschaften. Durch die Kombination von Vinylester, Ethylen mit (Meth)acrylaten wäre der Tg-Bereich ohne Probleme zu höheren und niedrigeren Tg-Bereichen ausweitbar. Demgegenüber stehen die eingangs geschilderten Probleme bei der Herstellung solcher Systeme mit reiner Polyvinylalkoholstabilisierung, geeignet zur Erzeugung von redispergierbaren Pulvern.

Probleme treten allerdings nicht nur bei der Herstellung, sondern auch bei der Anwendung der Polymerisate auf. Insbesondere bei der Anwendung von Polymerisaten in Form deren Redispersionspulver zur Verbesserung der Mörteleigenschaften, einem Haupteinsatzgebiet von Redispersionspulvern, müssen die Rezepturen über eine gewisse Zeit stabil bleiben und dürfen ihre Verarbeitungskonsistenz nicht wesentlich verändern (Viskositäts- bzw. Zementstabilität). In der Beton- und Mörtelindustrie spielen darüberhinaus die mechanischen Eigenschaften, wie die Druckfestigkeit, die Porosität und damit der Luftporengehalt eine wesentliche Rolle. Die mit dem Dispersionspulver vergüteten hydraulisch abbindenden Systeme sollen zudem noch bessere Haftung gegenüber den unvergüteten oder herkömmlich vergüteten Systemen erbringen.

Aus der DE-A 19962566 sind redispergierbare Pulver auf Basis von Copolymerisaten von Vinylestern und (Meth)acrylaten bekannt. Bei dem darin genannten Herstellungsverfahren wird der Vinylesteranteil ganz oder teilweise vorgelegt und der (Meth)-acrylatanteil nach dem Start der Polymerisation zudosiert. Die Polymerisation wird bei relativ hoher Temperatur durchgeführt. Diese Vorgehensweise hat den Nachteil, dass die damit erhältlichen Polymerisate relativ niedere Molekulargewichte haben. Der K-Wert liegt bei Werten kleiner 100. Infolgedessen sind die mechanischen Festigkeiten bei der Anwendung dieser Polymerisate im Baustoffbereich nicht voll zufriedenstellend.

Die US-A 5,391,608 und US-A 5,439,960 beschreiben Polymerdispersionen, welche zur Herstellung von Holzklebern mit verbesserter Wasserfestigkeit eingesetzt werden. Die Polymerdispersionen werden mit einem Verfahren hergestellt, bei dem in der ersten Stufe Vinylacetat mit einem nachvernetzenden Comonomer wie N-Methylolacrylamid (NMA) copolymerisiert wird, und nach Abkühlen der Polymerdispersion mittels Zugabe von Methylmethacrylat ein Methylmethacrylatpolymer polymerisiert wird.

Die EP-A 381122 beschreibt die Herstellung von Bindemitteln zur Herstellung von Nonwovens. Dabei werden Copolymerisate von Vinylestern mit damit inkompatiblen Comonomeren wie Methylmethacrylat oder Styrol hergestellt. In einer ersten Stufe werden Vinylacetat und gegebenenfalls Ethylen bis zu einem Vinylacetat-Restgehalt von < 5 % polymerisiert, und anschließend das inkompatible Monomer zudosiert und polymerisiert.

Der Erfindung lag die Aufgabe zugrunde, eine stabile, niederviskose, Schutzkolloid-stabilisierte Dispersion und entsprechende in Wasser redispergierbare Dispersionspulver auf Basis von Monomeren aus der Gruppe der Vinylester, gegebenenfalls Ethylen, und (Meth)Acrylsäureestern zur Verfügung zu stellen, die beim Einsatz in zementären Anwendungen eine voll befriedigende Viskositäts- bzw. Zementstabilität besitzen, das Zementabbinden nicht behindern und verbesserte mechanische Festigkeiten, insbesondere Haftzugsfestigkeiten in Klebemörtel wie Fliesenkleber und Wärmedämmverbundsystem-Mörtel, zeigen.

Überraschenderweise wurde gefunden, dass durch zweiphasige Polymerisation von Vinylester und gegebenenfalls Ethylen einerseits und (Meth)acrylaten andererseits Dispersionen erhalten werden, die trotz des homopolymeren (Meth)acrylatanteiles, der gebildet wird, zu block- und zementstabilen Redispersionspulvern versprüht werden können. Überraschenderweise wurde weiterhin gefunden, dass gute Haftzugfestigkeiten in Klebemörtel, insbesondere nach Nasslagerung und Frost-Tau, beobachtet werden.

Gegenstand der Erfindung ist die Verwendung von mit Schutzkolloid stabilisierten Mischpolymerisaten von Vinylester-, (Meth)acrylsäureester- und gegebenenfalls Ethylen-Comonomeren, in Form deren wässrigen Dispersionen oder in Wasser redispergierbaren Polymerpulver in Baustoffen, wobei die Mischpolymerisate erhalten werden mittels radikalisch initiierter Emulsionspolymerisation oder Suspensionspolymerisation von einem oder mehreren Monomeren aus der Gruppe der Ester der Acrylsäure oder Methacrylsäure mit Vinylestern, gegebenenfalls Ethylen, und weiteren damit copolymerisierbaren Monomeren, in Gegenwart von einem oder mehreren Schutzkolloiden aus der Gruppe der Polyvinylalkohole, und gegebenenfalls Trocknung der damit erhaltenen wässrigen Dispersion, dadurch gekennzeichnet, dass
a) in einer ersten Stufe der Vinylesteranteil, gegebenenfalls in Gegenwart von Ethylen und weiteren copolymerisierbaren Comonomeren, bis zu einem Umsatz von 90 bis 100 Gew.-% polymerisiert wird, und
b) anschließend in einer zweiten Stufe der Anteil an Ester der Acrylsäure oder Methacrylsäure zugegeben wird und polymerisiert wird.

Geeignete Monomeren aus der Gruppe der Ester der Acrylsäure und der Methacrylsäure sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Besonders bevorzugt sind Methylacrylat, Methylmethacrylat, n-Butylacrylat und 2-Ethylhexylacrylat. Am meisten bevorzugt wird Methylmethacrylat.

Die Ester der Acrylsäure und Methacrylsäure werden in einer Menge von 1 bis 70 Gew.-%, vorzugsweise 5 bis 40 Gew.-%, copolymerisiert, jeweils bezogen auf das Gesamtgewicht der Comonomere. Gegebenenfalls können in der zweiten Stufe der Polymerisation zusammen mit dem (Meth)acrylsäureesteranteil noch ein oder mehrere Monomere aus der Gruppe enthaltend Vinylaromaten wie Styrol, Diene wie 1,3-Butadien, und Acrylnitril copolymerisiert werden. Falls die zuletzt genannten Comonomere mit dem (Meth)acrylsäureesteranteil copolymerisiert werden, beträgt deren Anteil vorzugsweise von 1 bis 50 Gew.-%, bezogen auf das Gesamtgewicht der in der zweiten Stufe polymerisierten Monomere.

Geeignete Vinylester sind Vinylester von unverzweigten oder verzweigten Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Shell). Besonders bevorzugt ist Vinylacetat. Die Vinylester-Monomere werden im allgemeinen in einer Menge von 30 bis 90 Gew.-%, bezogen auf das Gesamtgewicht der Monomere, copolymerisiert.

Falls Ethylen in der ersten Stufe copolymerisiert wird, beträgt dessen Anteil 1 bis 40 Gew.-%, vorzugsweise 5 bis 25 Gew.-%, jeweils bezogen auf das Gesamtgewicht der Monomere.

Gegebenenfalls können in der ersten und/oder zweiten Stufe der Polymerisation noch 0.05 bis 10 Gew.-%, bezogen auf das Gesamtgewicht des Monomergemisches, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Bevorzugt werden Copolymerisate mit Vinylacetat, und gegebenenfalls Ethylen, und einem oder mehreren Monomeren aus der Gruppe Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, und gegebenenfalls Styrol. Besonders bevorzugt werden Copolymerisate von Vinylacetat und Ethylen mit einem oder mehreren Comonomeren aus der Gruppe n-Butylacrylat, 2-Ethylhexylacrylat und Methylmethacrylat. Am meisten bevorzugten werden Vinylacetat-Methylmethacrylat-Copolymere und Vinylacetat-Ethylen-Methylmethacrylat-Copolymere. Die genannten Copolymerisate können gegebenenfalls noch die obengenannten Hilfsmonomere enthalten.

Die Monomerauswahl bzw. die Auswahl der Gewichtsanteile der Comonomere erfolgt dabei so, dass im allgemeinen eine Glasübergangstemperatur Tg von -50°C bis +50°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt. Das Molekulargewicht der Mischpolymerisate, ausgedrückt als K-Wert nach Fikentscher (DIN 53726) beträgt 100 bis 150.

Die Herstellung erfolgt nach dem Emulsionspolymerisationsverfahren oder nach dem Suspensionspolymerisationsverfahren, vorzugsweise nach dem Emulsionspolymerisationsverfahren, wobei die Polymerisationstemperatur im allgemeinen 40°C bis 100°C, vorzugsweise 60°C bis 90°C beträgt. Bei der Copolymerisation von gasförmigen Comonomeren wie Ethylen und 1,3-Butadien kann auch unter Druck, im allgemeinen zwischen 5 bar und 100 bar, gearbeitet werden.

Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, t-Butylperoxopivalat, Cumolhydroperoxid, Isopropylbenzolmonohydroperoxid, Azobisisobutyronitril. Beispiele für monomerlösliche Initiatoren sind Dicetylperoxydicarbonat, Dicyclohexylperoxydicarbonat, Dibenzoyiperoxid. Die genannten Initiatoren werden im allgemeinen in einer Menge von 0.1 bis 2.0 Gew.-%, bezogen auf das Gesamtgewicht der Monomere, eingesetzt.

Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt vorzugsweise 0.15 bis 3 Gew.-%, bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, t-Dodecylmercaptan, Mercaptopropionsäure, Mercaptopropionsäuremethylester, Isopropanol und Acetaldehyd. Vorzugsweise werden keine regelnden Substanzen verwendet.

Geeignete Polyvinylalkohole sind teilverseifte oder vollverseifte Polyvinylalkohole. Bevorzugt sind teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015). Geeignet sind auch teilverseifte, hydrophob modifizierte Polyvinylalkohole mit einem Hydrolysegrad von 80 bis 95 Mol-% und einer Höpplerviskosität, in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0.1 bis 10 Gew.-%, bezogen auf das Gesamtgewicht des teilverseiften Polyvinylalkohols. Es können auch Gemische der genannten Polyvinylalkohole eingesetzt werden.

Weitere geeignete Polyvinylalkohole sind teilverseifte, hydrophobierte Polyvinylalkohole, die durch polymeranaloge Umsetzung, beispielsweise Acetalisierung der Vinylalkoholeinheiten mit C₁- bis C₄-Aldehyden wie Butyraldehyd erhalten werden. Der Anteil der hydrophoben Einheiten beträgt vorzugsweise 0.1 bis 10 Gew.-%, bezogen auf das Gesamtgewicht des teilverseiften Polyvinylacetats. Der Hydrolysegrad beträgt von 80 bis 95 Mol-%, vorzugsweise 85 bis 94 Mol-%, die Höpplerviskosität (DIN 53015, Methode nach Höppler, 4 %-ige wässrige Lösung) von 1 bis 30 mPas, vorzugsweise 2 bis 25 mPas.

Am meisten bevorzugt werden Polyvinylalkohole mit einem Hydrolysegrad von 85 bis 94 Mol-% und einer Höpplerviskosität, in 4 %-iger wässriger Lösung von 3 bis 15 mPas (Methode nach Höppler bei 20°C, DIN 53015. Die genannten Schutzkolloide sind mittels dem Fachmann bekannter Verfahren zugänglich.

Die Polyvinylalkohole werden im allgemeinen in einer Menge von insgesamt 1 bis 20 Gew.-%, bezogen auf das Gesamtgewicht der Monomere, bei der Polymerisation zugesetzt. Der Schutzkolloid-Anteil kann sowohl vollständig vorgelegt, als auch teilweise vorgelegt und teilweise zudosiert werden. Vorzugsweise werden mindestens 5 Gew.-% des Schutzkolloids vorgelegt, am meisten bevorzugt wird der Schutzkolloid-Anteil vollständig vorgelegt.

Bei dem erfindungsgemäßen Verfahren wird vorzugsweise ohne Zusatz von Emulgatoren polymerisiert. In Ausnahmefällen kann es von Vorteil sein noch zusätzlich kleine Mengen an Emulgatoren einzusetzen, gegebenenfalls 1 bis 5 Gew.-%, bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Die jeweiligen Monomere können in beiden Polymerisationsstufen jeweils insgesamt zudosiert werden oder in Anteilen vorgelegt werden und der Rest nach der Initiierung der Polymerisation zudosiert werden. Die Dosierungen können dabei separat (räumlich und zeitlich) durchgeführt werden oder die zu dosierenden Komponenten können alle oder teilweise voremulgiert dosiert werden. Der Monomerumsatz wird in den beiden Polymerisationsstufen mit der Initiatordosierung gesteuert. Die Initiatoren werden insgesamt so zudosiert, dass eine kontinuierliche Polymerisation gewährleistet ist.

Die zweite Stufe der Polymerisation (Acrylatpolymerisation) wird vorzugsweise begonnen, wenn die erste Stufe einen Umsatz von ≥ 95 Gew.-% erreicht hat. Das Mengenverhältnis von erster zu zweiter Stufe variiert vorzugsweise im Bereich der Gewichtsverhältnisse von 95 : 5 bis 60 : 40.

Nach Abschluss der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die erhaltenen wässrigen Dispersionen haben einen Feststoffgehalt von 30 bis 75 Gew.-%, vorzugsweise von 50 bis 60 Gew.-%. Zur Herstellung von in Wasser redispergierbaren Polymerpulvern werden die wässrigen Dispersionen, gegebenenfalls nach Zusatz von Schutzkolloiden als Verdüsungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zweioder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

In der Regel wird die Verdüsungshilfe in einer Gesamtmenge von 3 bis 30 Gew.-%, bezogen auf die polymeren Bestandteile der Dispersion, eingesetzt. Das heisst die Gesamtmenge an Schutzkolloid vor dem Trocknungsvorgang soll mindestens 3 bis 30 Gew.-%, bezogen auf den Polymeranteil betragen; bevorzugt werden 5 bis 20 Gew.-% bezogen auf den Polymeranteil eingesetzt.

Geeignete Verdüsungshilfen sind teilverseifte Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden keine weiteren Schutzkolloide als Polyvinylalkohole als Verdüsungshilfe eingesetzt

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 um.

Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Die wässrigen Polymerdispersionen und die in Wasser redispergierbaren, schutzkolloidstabilisierten Polymerpulver werden in Baustoffmassen verwendet. Beispielsweise in bauchemischen Produkten in Verbindung mit hydraulisch abbindenden Bindemitteln wie Zementen (Portland-, Aluminat-, Trass-, Hütten-, Magnesia-, Phosphatzement), Gips, Wasserglas, für die Herstellung von Bauklebern, Putzen, Spachtelmassen, Fußbodenspachtelmassen, Dichtschlämmen, Fugenmörtel und Farben.

Zur Herstellung der Baustoffmassen wird die Polymerdispersion bzw. das Polymerpulver mit den weiteren Rezepturbestandteilen wie Zement, Füllstoff und weiteren Zuschlägen in geeigneten Mischern gemischt und homogenisiert. Das Dispersionspulver kann gegebenenfalls auch in Form einer wässrigen Redispersion auf der Baustelle zugegeben werden. Vorzugsweise wird eine Trockenmischung hergestellt und das zur Verarbeitung erforderliche Wasser unmittelbar vor der Verarbeitung hinzugefügt. Bei der Herstellung von pastösen Bauklebern wird zunächst der Wasseranteil vorgelegt, die Dispersion oder das Pulver zugegeben und abschließend die Feststoffe eingerührt.

Die Dispersionen bzw. Pulver eignen sich vorzugsweise zur Verwendung in zementhaltigen Baukleberrezepturen. Typische Rezepturen enthalten 5 bis 80 Gew.-% Zement, 5 bis 80 Gew.-% Füllstoffe wie Quarzsand, Calciumcarbonat oder Talkum, 0.1 bis 2 Gew.-% Verdickungsmittel wie Celluloseether, Schichtsilikate, Polyacrylate, 0.1 bis 60 Gew.-% der Schutzkolloid-stabilisierten Mischpolymerisate in Form der Polymerdispersion bzw. des Polymerpulvers und gegebenenfalls weitere Additive zur Verbesserung von Standfestigkeit, Verarbeitbarkeit, offener Zeit und Wasserfestigkeit. Die Angaben in Gew.-% beziehen sich dabei immer auf 100 Gew.-% Trockenmasse der Rezeptur. Die genannten zementhaltigen Baukleberrezepturen finden vor allem bei der Verlegung von Fliesen aller Art (Steingut, Steinzeug, Feinststeinzeug, Keramik, Naturfliesen) im Innen- und Außenbereich als Fliesenkleber, und als Vollwärmeschutzkleber, Verwendung und werden vor deren Verwendung noch mit der entsprechenden Menge Wasser angerührt.

Die Schutzkolloid-stabilisierten Mischpolymerisate eignen sich auch zur Verwendung in zementfreien Baukleberrezepturen, beispielsweise mit der entsprechenden Menge Gips als anorganischem Bindemittel in der obengenannten Rezeptur. Die zementfreien Baukleberrezepturen finden vor allem bei der Verlegung von Fliesen aller Art (Steingut, Steinzeug, Feinststeinzeug, Keramik, Naturfliesen) als Fliesenkleber und bei der Verklebung von Polystyrolplatten auf Fassaden als Vollwärmeschutzkleber Verwendung.

Die wässrigen Dispersionen der Schutzkolloid-stabilisierten Mischpolymerisate werden insbesondere in pastösen Baukleber-Rezepturen der oben beschriebenen Zusammensetzung bezüglich anorganischem Bindemittel, Füllstoff und Verdicker eingesetzt. Pastöse Baukleber werden vor allem als Fliesenkleber und als Vollwärmeschutzkleber eingesetzt.

### Die nachfolgenden Beispiele dienen der weiteren Erläuterung der Erfindung:

### Vergleichsbeispiel 1 (analog DE-A 19962566)

In ein Polymerisationsgefäß mit 5 Liter Volumen wurden 2830 g Wasser, 2220 g einer 20 %-igen, wässrigen Lösung eines Polyvinylalkohols mit einem Hydrolysegrad von 88 Mol-% und einer Viskosität nach Höppler von 4 mPas, 5 g Eisenammoniumsulfat (1 %ig in Wasser) sowie 4860 g Vinylacetat vorgelegt und auf 85°C erwärmt. Gleichzeitig wurden 50 bar Ethylen aufgedrückt. Anschließend wurden tert.-Butylhydroperoxid (10 %-ig in Wasser) und Brüggolit (Natriumhydroxymethansulfinat) (5 %-ig in Wasser) kontinuierlich mit 60 bzw. 200 g/h zudosiert. Ab Polymerisationsbeginn, erkennbar an dem Anstieg der Innentemperatur, wurde das restliche Monomergemisch bestehend aus 1210 g Methylmethacrylat kontinuierlich in 3 h mit 403 g/h zudosiert. Paralell zur Monomerdosierung wurden 760 g einer 12 %-igen Polyvinylalkohollösung (Polyvinylalkohol wie oben) mit 254 g/h innerhalb von 3 h dosiert. Es wurde polymerisiert bis keine Polymerisationswärme mehr beobachtet werden konnte. Zur Entfernung von Restmonomer wurde nach dem Abkühlen auf 30°C mit 40 g tert.-Butylhydroperoxid (10 %-ig in Wasser) und 40 g Brüggolit (10 %ig in Wasser) nachpolymerisiert.

Man erhielt eine Dispersion mit einem Feststoffgehalt von 49.3 %, einer Viskosität von 620 mPas (Brookfield 20 bei 23°C), einem pH-Wert von 3.7 und einem Teilchengrößendurchmesser Dw von 1300 nm. Der Siebrückstand beim Sieben über 250 um betrug 14 g. Der K-Wert betrug 68. Das freie Restmonomer betrug < 100 ppm. Die Dispersion war im Zement stabil.
Das Polymer hat eine Tg von 20°C und eine Reissfestigkeit im Polymerfilm von 15 N/mm² bei einer Dehnung von 260 %.

### Vergleichsbeispiel 2:

Analog Beispiel 1 wurde eine Dispersion hergestellt mit dem Unterschied, dass auch Methylmethacrylat vollständig in die Vorlage gegeben wurde.
Man erhielt eine Dispersion, die jedoch beim Abkühlen koagulierte

### Vergleichsbeispiel 3:

Analog Beispiel 1 wurde eine Dispersion hergestellt, mit dem Unterschied, dass kein Methylmethacrylat copolymerisiert wurde. Die Tg des Vinylacetat-Ethylen-Copolymers wurde über die Ethylenmenge auf 15°C eingestellt.
Man erhielt eine Dispersion mit einem Feststoffgehalt von 55.2 %, einer Viskosität von 550 mPas (Brookfield 20 bei 23°C), einem pH-Wert von 4.1 und einem Teilchengrößendurchmesser Dw von 1100 nm. Der Siebrückstand beim Sieben über 250 µm war 350 g.

Der K-Wert betrug 110. Das freie Restmonomer betrug < 1000 ppm. Die Dispersion war im Zement stabil.
Das Polymer hat eine Tg von 15°C und eine Reissfestigkeit im Polymerfilm von 14 N/mm² bei einer Dehnung von 320 %.

### Beispiel 1:

In einem Polymerisationsreaktor mit 590 Liter Volumen wurden 100 kg Wasser, 71.7 kg einer 20 %-igen, wässrigen Lösung eines Polyvinylalkohols mit einem Hydrolysegrad von 88 Mol-% und einer Viskosität nach Höppler von 4 mPas, 500 g Eisenammoniumsulfat (1 %-ig in Wasser) sowie 165.5 kg Vinylacetat vorgelegt und auf 55°C erwärmt. Gleichzeitig wurden 55 bar Ethylen, entsprechend 52 kg, aufgedrückt. Anschließend wurden tert.-Butylhydroperoxid (5 %-ig in Wasser) und Brüggolit (Natriumhydroxymethansulfinat) (2.5 %-ig in Wasser) kontinuierlich mit 600 bzw. 1020 g/h zudosiert. Ab Polymerisationsbeginn, erkennbar an dem Anstieg der Innentemperatur, wurde die Innentemperatur auf 85°C erhöht.

Nach 2.5 h wurde mit der Dosierung von 55.2 kg Methylmethacrylat und 40.8 kg einer 20 %-igen, wässrigen Lösung eines Polyvinylalkohols mit einem Hydrolysegrad von 88 Mol-% und einer Viskosität nach Höppler von 4 mPas kontinuierlich über 2 h begonnen.

Gleichzeitig wurden die Initiatorraten auf 3000 g/h bzw. 5100 g/h tert.-Butylhydroperoxid (5 %-ig in Wasser) und Brüggolit (Natriumhydroxymethansulfinat) (2.5 %-ig in Wasser) erhöht.

Es wurde polymerisiert bis keine Polymerisationswärme mehr beobachtet werden konnte. Restgas wurde entspannt und zur Entfernung von Restmonomer wurde nach dem Abkühlen auf 30°C mit 750 g tert.-Butylhydroperoxid (10 %-ig in Wasser) und 650 g Brüggolit (10 %-ig in Wasser) nachpolymerisiert.

Man erhielt eine Dispersion mit einem Feststoffgehalt von 54.2 %, einer Viskosität von 300 mPas (Brookfield 20 bei 23°C), einem pH-Wert von 4.2 und einem Teilchengrößendurchmesser Dw von 2580 nm. Der Siebrückstand beim Sieben über 250 µm betrug 400 g.

Der K-Wert betrug 110. Das freie Restmonomer betrug < 1000 ppm. Die Dispersion war im Zement stabil.

Das Polymer hat eine Tg von 1°C und eine Reissfestigkeit im Polymerfilm von 19 N/mm² bei einer Dehnung von 360 %.

### Beispiel 2:

Die Polymerisation wurde analog Beispiel 1 durchgeführt. Es wurden aber 60 kg Ethylen verwendet.

Man erhielt eine Dispersion mit einem Feststoffgehalt von 54.2 %, einer Viskosität von 290 mPas (Brookfield 20 bei 23°C), einem pH-Wert von 4.1 und einem Teilchengrößendurchmesser Dw von 2310 nm. Der Siebrückstand beim Sieben über 250 µm betrug 130 g.

Der K-Wert betrug 111. Das freie Restmonomer betrug < 1000 ppm. Die Dispersion war im Zement stabil.

Das Polymer hat eine Tg von -3°C und eine Reissfestigkeit im Polymerfilm von 13.6 N/mm² bei einer Dehnung von 380 %.

### Beispiel 3:

Die Polymerisation wurde analog Beispiel 1 durchgeführt. Es wurden aber 55 kg Ethylen verwendet. Außerdem wurde mit Kaliumpersulfat anstelle tert.-Butylhydroperoxid polymerisiert.

Man erhielt eine Dispersion mit einem Feststoffgehalt von 53.2 %, einer Viskosität von 270 mPas (Brookfield 20 bei 23°C), einem pH-Wert von 4.3 und einem Teilchengrößendurchmesser Dw von 1910 nm. Der Siebrückstand beim Sieben über 250 µm betrug 300 g.

Der K-Wert betrug 115. Das freie Restmonomer betrug < 1000 ppm. Die Dispersion war im Zement stabil.

Das Polymer hat eine Tg von 1°C und eine Reissfestigkeit im Polymerfilm von 18 N/mm² bei einer Dehnung von 340 %.

### Beispiel 4:

Die Polymerisation wurde analog Beispiel 1 durchgeführt. Es wurden aber nur 36 kg Ethylen verwendet.

Man erhielt eine Dispersion mit einem Feststoffgehalt von 53.7 %, einer Viskosität von 390 mPas (Brookfield 20 bei 23°C), einem pH-Wert von 3.7 und einem Teilchengrößendurchmesser Dw von 860 nm. Der Siebrückstand beim Sieben über 250 µm betrug 230 g. Der K-Wert betrug 97. Das freie Restmonomer betrug < 1000 ppm. Die Dispersion war im Zement stabil.

Das Polymer hat eine Tg von 14°C und eine Reissfestigkeit im Polymerfilm von 27.6 N/mm² bei einer Dehnung von 270 %.

### Beispiel 5:

Die Polymerisation wurde analog Beispiel 1 durchgeführt. Es wurden aber 45 kg Ethylen verwendet.

Man erhielt eine Dispersion mit einem Feststoffgehalt von 53.7 %, einer Viskosität von 370 mPas (Brookfield 20 bei 23°C), einem pH-Wert von 3.7 und einem Teilchengrößendurchmesser Dw von 730 nm. Der Siebrückstand beim Sieben über 250 um betrug 120 g. Der K-Wert betrug 113. Das freie Restmonomer betrug < 1000 ppm. Die Dispersion war im Zement stabil.

Das Polymer hat eine Tg von 7°C und eine Reissfestigkeit im Polymerfilm von 21 N/mm² bei einer Dehnung von 320 %.

### Beispiel 6:

Die Polymerisation wurde analog Beispiel 4 durchgeführt. Es wurden aber 50 Gew.-% des Methylmethacrylates durch Styrol ersetzt.

Man erhielt eine Dispersion mit einem Feststoffgehalt von 51.8 %, einer Viskosität von 240 mPas (Brookfield 20 bei 23°C), einem pH-Wert von 3.9 und einem Teilchengrößendurchmesser Dw von 980 nm. Der Siebrückstand beim Sieben über 250 um betrug 180 g. Der K-Wert betrug 105. Das freie Restmonomer betrug < 1000 ppm. Die Dispersion war im Zement stabil.

Das Polymer hat eine Tg von 5°C und eine Reissfestigkeit im Polymerfilm von 15.5 N/mm² bei einer Dehnung von 300 %.

### Pulverherstellung:

Die Dispersionen aus den Beispielen 1 bis 6 und den Vergleichsbeispielen 1 und 3 wurden mit 5 Gew.-% (fest/fest) Polyvinylalkohol mit einem Hydrolysegrad von 88 Mol-% und einer Viskosität nach Höppler von 4 mPas versetzt und mit Wasser auf eine Verdüsungsviskosität von 250 mPas verdünnt. Die Dispersion wurde dann mittels Zweistoffdüse versprüht. Als Verdüsungskomponente diente auf 4 bar vorgepresste Luft, die gebildeten Tropfen wurden mit auf 125°C erhitzter Luft im Gleichstrom getrocknet. Das erhaltene trockene Pulver wurde mit 10 Gew.-% handelsüblichem Antiblockmittel (Gemisch aus Calcium-Magnesium-Carbonat und Magnesiumhydrosilikat) versetzt.

### Redispergierverhalten der Polymerfilme:

Aus den Dispersionen der genannten Beispielen (vor Sprühtrocknung) wurden auf Glasplatten 0.2 mm dicke Filme hergestellt und diese 15 Minuten bei 105°C getrocknet. Zur Überprüfung der Filmredispergierbarkeit wurde bei Raumtemperatur mit einer Pipette jeweils ein Wassertropfen auf eine homogene Stelle des zu prüfenden Filmes aufgebracht, und nach 60 Sekunden Einwirkzeit der Wassertropfen mit der Fingerkuppe so lange an der gleichen Stelle verrieben, bis die Glasplatte an dieser Stelle filmfrei war, der Film in Filmstücke zerfiel oder vollständig erhalten blieb.

Die Redispergierbarkeit der Polymerfilme wurde mit folgendem Bewertungsschema beurteilt:
Note 1: Film läßt sich durch leichtes Reiben sofort redispergieren oder redispergiert bereits selbständig;
Note 2: Film läßt sich durch Reiben redispergieren, wenig redispergierbare Filmstücke möglich;
Note 3: Film läßt sich nur durch kräftiges Reiben unter Bildung von Filmstücken redispergieren;
Note 4: Film läßt sich auch durch längeres kräftiges Reiben nicht redispergieren, sondern zerfällt in Filmstücke.

Bestimmung des Absitzverhaltens der Pulver (Röhrenabsitz): Zur Bestimmung des Absitzverhaltens wurden jeweils 50 g des Dispersionspulvers in 50 ml Wasser redispergiert, danach auf 0.5 % Festgehalt verdünnt und die Absitzhöhe an Feststoff von 100 ml dieser Redispersion in eine graduierte Röhre gefüllt und das Absetzen nach 1 Stunde gemessen.

### Bestimmung der Blockfestigkeit:

Zur Bestimmung der Blockfestigkeit wurde das Dispersionspulver in ein Eisenrohr mit Verschraubung gefüllt und danach mit einem Metallstempel belastet. Nach Belastung wurde im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des Pulver bestimmt. Die Blockstabilität wurde wie folgt klassifiziert:
1 = sehr gute Blockstabilität
2 = gute Blockstabilität
3 = befriedigende Blockstabilität
4 = nicht blockstabil, Pulver nach Zerdrücken nicht mehr rieselfähig.

### Bestimmung der Zementstabilität:

Es wurde eine Zementmischung der nachfolgenden Rezeptur angerührt:

| | |
|---|---|
| Portlandzement | 82.5 g |
| Calcit (CaCO₃, 10-40 mm) | 75.0 g |
| Quarzsand (200-500 mm) | 142.0 g |
| Dispersionspulver | 14.5 g |
| Wasser | 85.0 g |

Die Verarbeitbarkeit der Zementmischung wurde über einen Zeitraum von 2 Stunden beobachtet und qualitativ beurteilt.

Die Prüfergebnisse sind in Tabelle 1 zusammengefaßt.

**Tabelle 1:**

| Beispiel | Redispergierbarkeit | Röhrenabsitz [cm] | Blockfestigkeit | Zementstabilität |
|---|---|---|---|---|
| Bsp. 1 | 1 | 1.5 | 1 | Stabil |
| Bsp. 2 | 1 | 2.0 | 1 - 2 | Stabil |
| Bsp. 3 | 1 | 1.0 | 1 | Stabil |
| Bsp. 4 | 1 | 1.0 | 1 | Stabil |
| Bsp. 5 | 1 | 1.0 | 1 | Stabil |
| V.bsp. 1 | 1 | 1.0 | 1 | Stabil |
| V.bsp. 3 | 1 | 1.5 | 1 | Stabil |

Bei der erfindungsgemäßen Verwendung werden Produkte mit vergleichbarer Zementstabilität erzielt, wie mit Standard-Vinylacetat-Ethylen-Pulvern oder einstufig erzeugten Vinylacetat-Ethylen-Methylmethacrylat-Terpolymeren. Die mechanischen Festigkeiten im Polymerfilm und in der Baustoffzusammensetzung sind bei deutlich niedrigerer Tg erheblich verbessert gegenüber den Standards. Bei vergleichbarer Tg werden nochmals bessere Werte beobachtet.

Haftzugfestigkeiten im Fliesenkleber wurden in folgender Rezeptur überprüft:

| | |
|---|---|
| Quarzsand | 601 bzw. 641 Teile |
| Portlandzement | 350 Teile |
| Cellulose | 4 Teile |
| Dispersionspulver | 45 bzw. 5 Teile |

Es wurden die Haftzugfestigkeiten nach 4 Lagerbedingungen bestimmt:

| | |
|---|---|
| 28T | 28 Tage Trockenlagerung |
| 7T/21N | 7 Tage Trocken- / 21 Tage Naßlagerung |
| 14T/14TS+70°C/1T | 14 Tage Trocken- / 14 Tage Wärmelagerung |
| Frost-Tau | Frost-Tau-Lagerung |

Die Ergebnisse für einen Polymerpulveranteil von 5 bzw. 45 Gew.-Teile sind in den Tabellen 2 und 3 zusammengefasst.

**Tabelle 2:**

| Beispiel 4.5% Pulver | RD % | RF N/mm² | 28T N/mm² | 7T/21N N/mm² | 14T/14TS+70/1T N/mm² | Frost-Tau N/mm² |
|---|---|---|---|---|---|---|
| Bsp. 1 | 360 | 19.0 | 1.62 | 1.13 | 1.38 | 1.25 |
| Bsp. 2 | 380 | 13.6 | 1.69 | 1.08 | 1.40 | 1.27 |
| Bsp. 3 | 340 | 18.0 | 1.65 | 1.08 | 1.41 | 1.27 |
| Bsp. 4 | 270 | 27.6 | 1.76 | 1.14 | 1.65 | 1.29 |
| Bsp. 5 | 320 | 21.0 | 1.55 | 1.16 | 1.40 | 1.35 |
| Bsp. 6 | 300 | 15.5 | 1.62 | 1.18 | 1.45 | 1.32 |
| V.bsp. 1 | 260 | 15.0 | 1.55 | 1.05 | 1,25 | 1.10 |
| V.bsp. 3 | 320 | 14.0 | 1.64 | 1.04 | 1.37 | 1.20 |

**Tabelle 3:**

| Beispiel 0.5% Pulver | RD % | RF N/mm² | 28T N/mm² | 7T/21N N/mm² | 14T/14TS+70/1T N/mm² | Frost-Tau N/mm² |
|---|---|---|---|---|---|---|
| Bsp. 1 | 360 | 19.0 | 1.01 | 1.01 | 0.57 | 1.21 |
| Bsp. 2 | 380 | 13.6 | 1.06 | 0.98 | 0.54 | 1.28 |
| Bsp. 3 | 340 | 18.0 | 1.08 | 1.02 | 0.57 | 1.25 |
| Bsp. 4 | 270 | 27.6 | 1.16 | 1.07 | 0.58 | 1.27 |
| Bsp. 5 | 320 | 21.0 | 1.07 | 1.17 | 0.58 | 1.21 |
| Bsp. 6 | 300 | 15.5 | 1.05 | 1.12 | 0.51 | 1.23 |
| V.bsp. 1 | 260 | 15.0 | 1.02 | 0.95 | 0.40 | 1.10 |
| V.bsp. 3 | 320 | 14.0 | 1.04 | 0.92 | 0.30 | 1.14 |

Einzig mit den erfindungsgemäßen Pulvern werden unter allen Lagerbedingungen und in beiden Formulierungen zufriedenstellende Ergebnisse erhalten.

Insbesondere bei einer Einsatzmenge von 0.5 Gew.-% Polymerpulver werden nach Nasslagerung nur mit den erfindungsgemäßen Pulvern 0.5 N/mm² erreicht (C1-Norm).

## Patentansprüche

1. Verwendung von mit Schutzkolloid stabilisierten Mischpolymerisaten von Vinylester-, (Meth)acrylsäureester- und gegebenenfalls Ethylen-Comonomeren, in Form deren wässrigen Dispersionen oder in Wasser redispergierbaren Polymerpulver in Baustoffen, wobei die Mischpolymerisate erhalten werden mittels radikalisch initiierter Emulsionspolymerisation oder Suspensionspolymerisation von einem oder mehreren Monomeren aus der Gruppe der Ester der Acrylsäure oder Methacrylsäure mit Vinylestern, gegebenenfalls Ethylen, und weiteren damit copolymerisierbaren Monomeren, in Gegenwart von einem oder mehreren Schutzkolloiden aus der Gruppe der Polyvinylalkohole, und gegebenenfalls Trocknung der damit erhaltenen wässrigen Dispersion, **dadurch gekennzeichnet, dass**
a) in einer ersten Stufe der Vinylesteranteil, gegebenenfalls in Gegenwart von Ethylen und weiteren copolymerisierbaren Comonomeren, bis zu einem Umsatz von 90 bis 100 Gew.-% polymerisiert wird, und
b) anschließend in einer zweiten Stufe der Anteil an Ester der Acrylsäure oder Methacrylsäure zugegeben wird und polymerisiert wird.

2. Verwendung nach Anspruch 1, **dadurch gekennzeichnet, dass** die Ester der Acrylsäure und Methacrylsäure in einer Menge von 1 bis 70 Gew.-%, vorzugsweise 5 bis 40 Gew.-% copolymerisiert, jeweils bezogen auf das Gesamtgewicht der Comonomere.

3. Verwendung nach Anspruch 1 oder 2, **dadurch gekennzeichnet, dass** Mischpolymerisate mit Vinylacetat, und gegebenenfalls Ethylen, und einem oder mehreren Monomeren aus der Gruppe Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, und gegebenenfalls Styrol, verwendet werden.

4. Verwendung nach Anspruch 1 bis 3, **dadurch gekennzeichnet, dass** Vinylacetat-Methylmethacrylat-Mischpolymerisate oder Vinylacetat-Ethylen-Methylmethacrylat-Mischpolymerisate, welche gegebenenfalls noch Styrol und/oder Hilfsmonomere enthalten, verwendet werden.

5. Verwendung nach Anspruch 1 bis 4, **dadurch gekennzeichnet, dass** die Glasübergangstemperatur Tg der Mischpolymerisate -50°C bis +50°C beträgt und das Molekulargewicht der Mischpolymerisate, ausgedrückt als K-Wert nach Fikentscher (DIN 53726), 100 bis 150 beträgt.

6. Verwendung nach Anspruch 1 bis 5, **dadurch gekennzeichnet, dass** die Mischpolymerisate mit teilverseiften Polyvinylalkohoie oder mit teilverseiften, hydrophob modifizierten Polyvinylalkoholen, jeweils mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015) stabilisiert sind.

7. Verwendung nach Anspruch 1 bis 6 in Baustoffen, in Verbindung mit hydraulisch abbindenden Bindemitteln, für die Herstellung von Bauklebern, Putzen, Spachtelmassen, Fußbodenspachtelmassen, Dichtschlämmen, Fugenmörtel und Farben.

8. Verwendung nach Anspruch 7 in zementhaltigen Baukleberrezepturen enthaltend 5 bis 80 Gew.-% Zement, 5 bis 80 Gew.-% Füllstoffe, 0.1 bis 2 Gew.-% Verdickungsmittel, 0.1 bis 60 Gew.-% der Schutzkolloid-stabilisierten Mischpolymerisate in Form der Polymerdispersion oder des Polymerpulvers, wobei sich die Angaben in Gew.-% auf 100 Gew.-% Trockenmasse der Rezeptur beziehen.

9. Verwendung nach Anspruch 8 als Fliesenkleber und als Vollwärmeschutzkleber

10. Verwendung nach Anspruch 7 in zementfreien Baukleberrezepturen als Fliesenkleber und als Vollwärmeschutzkleber.

11. Verwendung nach Anspruch 7 als wässrige Dispersion der Schutzkolloid-stabilisierten Mischpolymerisate in pastösen Baukleber-Rezepturen als Fliesenkleber und als Vollwärmeschutzkleber.

## Claims

1. Use of copolymers which are derived from vinyl ester, (meth)acrylic ester and optionally ethylene comonomers and are stabilized with a protective colloid, in the form of their aqueous dispersions or polymer powders which are redispersible in water in building materials, where the copolymers are obtained by means of free-radically initiated emulsion polymerization or suspension polymerization of one or more monomers from the group consisting of esters of acrylic acid or methacrylic acid with vinyl esters, optionally ethylene and further monomers copolymerizable therewith, in the presence of one or more protective colloids from the group consisting of polyvinyl alcohols, and, if desired, drying of the aqueous dispersion obtained in this way, **characterized in that**
a) the vinyl ester component is polymerized, if desired in the presence of ethylene and further copolymerizable comonomers, to a conversion of from 90 to 100% by weight in a first step, and
b) the ester(s) of acrylic acid or methacrylic acid is/are subsequently added and polymerized in a second step.

2. Use according to Claim 1, **characterized in that** the esters of acrylic acid and methacrylic acid are copolymerized in an amount of from 1 to 70% by weight, preferably from 5 to 40% by weight, in each case based on the total weight of the comonomers.

3. Use according to Claim 1 or 2, **characterized in that** copolymers of vinyl acetate and optionally ethylene with one or more monomers from the group consisting of methyl acrylate, methyl methacrylate, ethyl acrylate, ethyl methacrylate, propyl acrylate, propyl methacrylate, n-butyl acrylate, n-butyl methacrylate, 2-ethylhexyl acrylate and styrene are used.

4. Use according to any of Claims 1 to 3, **characterized in that** vinyl acetate-methyl methacrylate copolymers or vinyl acetate-ethylene-methyl methacrylate copolymers, which may further comprise styrene and/or auxiliary monomers, are used.

5. Use according to any of Claims 1 to 4, **characterized in that** the glass transition temperature Tg of the copolymers is from -50°C to +50°C and the molecular weight of the copolymers, expressed as Fikentscher K value (DIN 53726), is from 100 to 150.

6. Use according to any of Claims 1 to 5, **characterized in that** the copolymers are stabilized with partially hydrolysed polyvinyl alcohols or with partially hydrolysed, hydrophobically modified polyvinyl alcohols, in each case having a degree of hydrolysis of from 80 to 95 mol% and a Höppler viscosity in 4% strength aqueous solution of from 1 to 30 mPas (Höppler method at 20°C, DIN 53015).

7. Use according to any of Claims 1 to 6 in building materials, in conjunction with hydraulically setting binders, for the production of building adhesives, plasters and renders, knifing fillers, flooring screeds, sealing slurries, jointing mortars and paints.

8. Use according to Claim 7 in cement-containing building adhesive formulations comprising from 5 to 80% by weight of cement, from 5 to 80% by weight of fillers, from 0.1 to 2% by weight of thickeners and from 0.1 to 60% by weight of the copolymers stabilized by protective colloids in the form of the polymer dispersion or the polymer powder, where the percentages by weight are based on 100% by weight of dry matter in the formulation.

9. Use according to Claim 8 as tile adhesive and as thermal insulation adhesive.

10. Use according to Claim 7 in cement-free building adhesive formulations as tile adhesives and as thermal insulation adhesives.

11. Use according to Claim 7 as aqueous dispersion of the copolymers stabilized by protective colloids in paste-like building adhesive formulations as tile adhesives and as thermal insulation adhesives.

## Revendications

1. Utilisation de copolymères stabilisés avec un colloïde protecteur, de comonomères d'esters vinyliques, d'esters d'acide (méth)acrylique et, le cas échéant, d'éthylène, sous forme de leurs dispersions aqueuses ou de poudres de polymères redispersables dans l'eau dans des matériaux de construction, les copolymères étant obtenus au moyen de la polymérisation en émulsion ou de la polymérisation en suspension initiée par voie radicalaire d'un ou plusieurs monomère(s) appartenant au groupe des esters de l'acide acrylique ou de l'acide (méth)acrylique avec des esters vinyliques, le cas échéant l'éthylène, et d'autres monomères copolymérisables avec ces derniers, en présence d'un ou plusieurs colloïde(s) protecteur(s) appartenant au groupe des alcools polyvinyliques et, le cas échéant, séchage de la dispersion aqueuse ainsi obtenue , **caractérisée en ce que**
a) on polymérise, dans une première étape, la fraction ester vinylique, le cas échéant, en présence d'éthylène et d'autres comonomères copolymérisables, jusqu'à un taux de conversion de 90 à 100% en poids, et
b) on ajoute ensuite, dans une deuxième étape, la fraction ester d'acide acrylique ou d'acide méthacrylique et on polymérise.

2. Utilisation selon la revendication 1, **caractérisée en ce que** l'ester de l'acide acrylique et de l'acide méthacrylique copolymérise dans une proportion de 1 à 70% en poids, de préférence 5 à 40% en poids, à chaque fois, rapportée au poids total des comonomères.

3. Utilisation selon la revendication 1 ou 2, **caractérisée en ce que** l'on utilise les copolymères avec l'acétate de vinyle, et le cas échéant l'éthylène, et un ou plusieurs monomère(s) appartenant au groupe acrylate de méthyle, méthacrylate de méthyle, acrylate d'éthyle, méthacrylate d'éthyle, acrylate de propyle, méthacrylate de propyle, acrylate de n-butyle, méthacrylate de n-butyle, acrylate de 2-éthylhexyle, et, le cas échéant, styrène.

4. Utilisation selon les revendications 1 à 3, **caractérisée en ce que** l'on utilise des copolymères acétate de vinyle-méthacrylate de méthyle ou des copolymères acétate de vinyle-éthylène-méthacrylate de méthyle, qui contiennent encore, le cas échéant, du styrène et/ou des monomères d'appoint.

5. Utilisation selon les revendications 1 à 4, **caractérisée en ce que** la température de transition vitreuse Tg des copolymères est de -50°C à +50°C et le poids moléculaire des copolymères, exprimé en tant que valeur K selon Fikentscher (DIN 53726) est de 100 à 150.

6. Utilisation selon les revendications 1 à 5, **caractérisée en ce que** les copolymères sont stabilisés avec des alcools polyvinyliques partiellement saponifiés ou avec des alcools polyvinyliques modifiés pour les rendre hydrophobes, partiellement saponifiés, à chaque fois avec un degré d'hydrolyse de 80 à 95% en mole et une viscosité Höppler en une solution aqueuse à 4%, de 1 à 30 mPa•s (méthode selon Höppler à 20°C, DIN 53015).

7. Utilisation selon les revendications 1 à 6 dans des matériaux de construction, en association avec des liants à prise hydraulique pour la fabrication de colles pour la construction, enduits, mastics, masses applicables à la spatule pour revêtements de sols, boues d'étanchéité, mortiers pour joints et peintures.

8. Utilisation selon la revendication 7 dans des formulations de colles pour la construction contenant 5 à 80% en poids de ciment, 5 à 80% en poids de charges, 0,1 à 2% en poids d'agent épaississant, 0,1 à 60% en poids des copolymères stabilisés avec un colloïde protecteur sous forme de dispersion de polymères ou de poudre de polymères, les indications en pourcentage en poids se rapportant à 100% en poids de masse sèche de la formulation.

9. Utilisation selon le revendication 8 comme colles pour carreaux et comme colles de calorifugeage.

10. Utilisation selon la revendication 7 dans des formulations de colles pour la construction, sans ciment, comme colles pour carreaux et comme colles de calorifugeage.

11. Utilisation selon la revendication 7 sous forme de dispersion aqueuse des copolymères stabilisés avec un colloïde protecteur dans des formulations de colles pour la construction pâteuses, comme colles pour carreaux et comme colles de calorifugeage.
